# EUROPÄISCHE PATENTANMELDUNG

(11) **EP 1 389 596 A1**
(43) Veröffentlichungstag der Anmeldung: **18.02.2004**
(21) Anmeldenummer: 02018003.0
(22) Anmeldetag: 12.08.2002
(51) Int. Cl.: B65G 47/76, B65G 47/71

(54) **Vorrichtung zur Vereinzelung von Stückgütern**

(71) Anmelder: Siemens Schweiz AG, 8047 Zürich (CH)
(72) Erfinder: Maier, Wilhelm, 5430 Wettingen (CH)
(74) Vertreter: Fischer, Michael, Dr.

(57) **Zusammenfassung**

Zur Vereinzelung von Stückgütern (10) wird eine Vorrichtung vorgeschlagen, die eine erste Förderstrecke (1), eine Separierstrecke (3) und eine zweite Förderstrecke (2) aufweist. Die Separierstrecke (3) enthält um eine Achse (5) schwenkbare Trennkeile (4). Zu Beginn (B) der Separierstrecke (3) ist eine Lichtbarriere (6) vorgesehen. Die Lichtbarriere (6) weist eine Vielzahl linear angeordneter Lichtsensoren auf. Dadurch lässt sich das Vorhandensein eines Stückgutes an der Stelle (B) feststellen. Eine Steuerung wertet die Signale der Lichtsensoren aus und abhängig von der Auswertung erfolgt eine Betätigung (Richtungen E2) der Trennkeile (4). Dadurch wird eine leistungsfähige Vereinzelung von Stückgütern (10) erreicht.

## Beschreibung

Die vorliegende Erfindung betrifft eine Vorrichtung zur Vereinzelung von Stückgütern gemäss dem Oberbegriff des Patentanspruches 1.

Um Stückgüter, wie Pakete und Warensendungen von einem Absender an einen Empfänger zuzustellen, ist ein relativ hoher Aufwand innerhalb einer ganzen logistischen Kette erforderlich. Die Stückgüter sind auf eine möglichst effiziente Weise einzusammeln, zu transportieren und zu verteilen.

Als Zwischenglied in dieser logistischen Kette dienen Verteilzentren. Die Stückgüter werden an ein Verteilzentrum angeliefert und - sofern nicht bereits vorher geschehen - mit einer maschinenlesbaren Adresscodierung versehen. Nachfolgend werden die Stückgüter mittels eines Sortierförderers den gewünschten Zieldestinationen zugeordnet.

Für die Erreichung eines hohen Automatisierungsgrades ist sehr, dass die Stückgüter einigermassen ungeordnet entladen und anschliessend mit einem Sortierförderer zur gewünschten Zielstelle transportiert werden können. Bei diesem Förderund Sortierprozess müssen die Stückgüter in definierter Weise auf die einzelnen Transportwagen des Sortierförderers aufgegeben und in ebenso definierter Weise auch wieder an den Zielstellen entladen werden. Dazu müssen die Stückgüter entgegen ihrer nach dem Ausladen vollkommen chaotischen und angehäuften Anordnung vor der Aufgabe auf den Sortierförderer in vereinzelter Form vorliegen. Dadurch wird sichergestellt, dass nun genau dieses oder jenes Stückgut auf diesen oder jenen freien Transportwagen aufgegeben werden kann. Statt von chaotischer Anordnung spricht man synonym auch von zufälliger Verteilung der Stückgüter.

Zur Vereinzelung der Stückgüter sind verschiedene Singulator-Lösungen - auch Vereinzelner genannt - bekannt, die jedoch alle nicht voll zufriedenstellend sind, da
i) das Preis/Leistungsverhältnis für verbesserungswürdig und/oder
ii) die technische Ausführung als kompliziert gehalten wird.

Die in der Schrift EP 0 780 328 A1 (Santrade Ltd, CH-Luzern) offenbarte Vereinzelungseinrichtung weist hintereinander angeordnete Sektionen mit angetriebenen, schräg zu einer Leitwand ausgerichteten Rollen auf. Die Geschwindigkeit der Rollen steigt von Sektion zu Sektion, um Zwischenräume zwischen den Paketen zu erzeugen. Dabei wird der Transportpfad für die Pakete von Sektion zu Sektion schmaler, damit nur einzelne Pakete die Einrichtung verlassen. Die Pakete, die in den Sektionen über die offenen Leisten ausgesondert werden, gelangen über einen Rückführungspfad wieder auf den Transportpfad mit den Sektionen. Diese Lösung benötigt viel Platz, insbesondere in der Länge, und garantiert bei unterschiedlich grossen Paketen keine sichere Vereinzelung, da auch zwei nebeneinanderliegende schmale Pakete die Vereinzelungseinrichtung passieren können.

In der Schrift US 5,638,938 (Lockheed Martin Tactical Systems, New York) wird eine Vereinzelungseinrichtung für Pakete beschrieben, bei der mehrere jeweils separat angetriebene ansteigende Transportbänder hintereinander angeordnet sind, wobei die Pakete vom oberen Teil des vorherigen Bandes auf den unteren Teil des nächsten Bandes fallen. Zwischen den Bändern sind Lichtschranken angeordnet. Befinden sich Pakete innerhalb einer Lichtschranke, so wird der Antrieb des jeweils vorgelagerten Bandes ausgeschaltet. Auf diese Weise wird die Paketansammlung in Transportrichtung auseinandergezogen. Da es hierbei aber möglich ist, dass Pakete nebeneinander liegen, sind noch Finger vorgesehen, die gesteuert durch die Signale eines quer zur Transportrichtung angeordneten optischen Zeilensensors nur ein Paket von mehreren nebeneinanderliegenden Paketen durchlassen. Diese Lösung benötigt ebenfalls eine grosse Baulänge und eine sichere Funktion auch bei Paketen stark unterschiedlicher Grösse.

Eine weitere hinsichtlich des Vereinzelungsergebnisses zufriedenstellende Lösung kann der Schrift EP 1 105 327 B1 (Siemens AG, München) entnommen werden. Der dort offenbarte Vereinzelner umfasst ein Erkennungsfeld, auf welches die Pakete in ungeordneter Folge gefördert werden. Mit Erreichen des Endes des Erkennungsfeldes von dem zuvorderst liegenden Paket werden die in dem Erkennungsfeld liegenden Paket mit separat ansteuerbaren Stössel-Elementen von dem laufenden Transportband abgehoben. Aufgrund einer vorgenommenen optischen Lageanalyse werden diese anschliessend wieder separat so abgesenkt, dass jeweils nur ein Paket ohne Behinderung durch die jeweils anderen noch auf den aufgestellten Stösselelementen lagernden Paketen von den Transportbänder weitergefördert wird, bis das letzte Paket das Erkennungsfeld verlassen hat. Anschliessend wird dieses wieder neu beschickt. Es ist leicht erkennbar, dass zur vollautomatisierten Steuerung dieses Vereinzelungsvorganges eine Steuerungs-Software erforderlich ist und auch die benötigten Komponenten zur Bild-Erkennung und zur separaten Betätigung der Stösselelemente vergleichsweise teuer sind.

In der Schrift DE 100 51 932 A1 (psb GmbH Materialfluss + Logistik, DE - Pirmasens) ist ein Vereinzelungsverfahren angegeben, wonach bei zwei hintereinander angeordneten Förderbändern deren Geschwindigkeit so abgestimmt wird, dass zwischen zwei Stückgütern eine Lücke entsteht.

Im Sinne dieser Schrift wird unter dem Begriff Stückgut jedwelche Form einer Verpackungseinheit subsummiert wie z.B. Postpakete, Säcke, Behälter, usw.

Der vorliegenden Erfindung liegt daher die Aufgabe zugrunde, eine Vorrichtung zur Vereinzelung von Stückgütern anzugeben, die es erlauben, die Vereinzelung von Stückgütern in technisch einfacher und kostengünstiger Weise mit hohem Durchsatz zu ermöglichen. Dabei dürfen die Abmessungen und Gewichte der zu sortierenden Stückgüter innerhalb weiter Grenzen liegen.

Diese Aufgabe wird durch die im Patentanspruch 1 angegebenen Merkmale gelöst.

Vorteilhafte Ausgestaltungen der Erfindung sind in weiteren Ansprüchen angegeben.

Mit der erfindungsgemässen Vorrichtung kann ein Strom mit einer Vielzahl von herangeführten Stückgütern zuverlässig und auf einfache Weise separiert werden.

Insbesondere kann mit dieser Ausgestaltung der erfindungsgemässen Vorrichtung ein breiter Stückgutstrom in eine geeignete Anzahl von Teilströmen auf den einzelnen Bahnen zerlegt werden. Dabei kann durch eine geeignete Dimensionierung der Breite der ersten Förderstrecke und der Breite der Separierstrecke relativ zur grössten spezifizierten Ausdehnung eines Stückgutes ein qualitativ hochstehendes Vereinzelungsergebnis erzielt werden.

In einer besonderen Ausführungsform, wonach
vor der Separierstrecke Sensoren zur Erfassung der Stückgüter angeordnet sind, wobei die Sensoren das Vorhandensein eines Stückgutes zu Beginn der Separierstrecke feststellen und
wobei die Trennkeile abhängig vom festgestellten Vorhandensein eines Stückgutes schwenkbar betätigbar sind, um ein Stückgut in eine bestimmte Bahn zu lenken;
kann die Vereinzelung auf sehr differenzierte und somit auf das entsprechende Stückgut angepasste Weise erfolgen, ohne dass deswegen ein hoher apparativer oder steuerungsmässiger Aufwand zu leisten ist.

So können sich die folgenden Vorteile zusätzlich ergeben:
i) Dadurch, dass
   die Sensoren als eine Lichtbarriere ausgebildet sind; können die Stückgüter in einer rasterartigen Weise detektiert werden und erlauben eine präzise Betätigung der Trennkeile, so dass ein qualitativ sehr hochstehendes Vereinzelungsergebnis erzielt wird. (Patentanspruch 3).
ii) Dadurch, dass
   mit den Sensoren die Breite eines Stückgutes feststellbar ist und dass die Trennkeile in Abhängigkeit von der festgestellten Breite betätigbar sind;
   können unterschiedlich dimensionierte Stückgüter besonders zuverlässig vereinzelt werden (Patentanspruch 4).
iii) Dadurch, dass
   mit den Sensoren das Vorhandensein von mehr als einem Stückgut pro Bahn an der Position der Sensoren feststellbar ist und dass die Trennkeile in Abhängigkeit von der festgestellten Anzahl Stückgüter betätigbar sind;
   wird ein qualitativ hochstehendes Vereinzelungsergebnis auch dann erzielt, wenn durch eine unvorgesehene Häufung mehr als die vorgesehene Anzahl Stückgüter temporär von der ersten Förderstrecke herangeführt wird.
   (Patentanspruch 5).
iv) Dadurch, dass
   die Nase eines Trennkeils eine scharf gebogene Form aufweist;
   wird ein "Aufspiessen" von Stückgütern ganz erheblich erschwert und dadurch ein dauerhaft zuverlässiges Vereinzeln der erfindungsgemässen Vorrichtung gewährleistet
   (Patentanspruch 8).
v) Dadurch, dass
   der zweite Förderabschnitt eine der Anzahl Bahnen der Separierstrecke entsprechende Anzahl parallel laufender Förderbänder aufweist;
   können die vereinzelten Stückgüter von den Bahnen auf verschiedenen weiteren Strecken quasigleichzeitig weiter verarbeitet werden (Patentanspruch 11).
vi) Dadurch, dass
   die Geschwindigkeit der Förderbänder in Verarbeitungsrichtung von Förderband zu Förderband zunimmt;
   wird die Vereinzelung zusätzlich und unabhängig zur Betätigung der Trennkeile sichergestellt (Patentanspruch 12).

Die Erfindung wird nachfolgend anhand der Zeichnung beispielsweise näher erläutert. Dabei zeigen:
- Figur 1: Ansicht und Schnittdarstellung einer Vorrichtung zur Vereinzelung von Stückgütern;
- Figur 2: Grundriss einer Vorrichtung zur Vereinzelung von Stückgütern;
- Figur 3: Darstellung zur Formgebung der Nase eines Trennkeils;
- Figur 3a: Detailansicht der Nase eines Trennkeils.

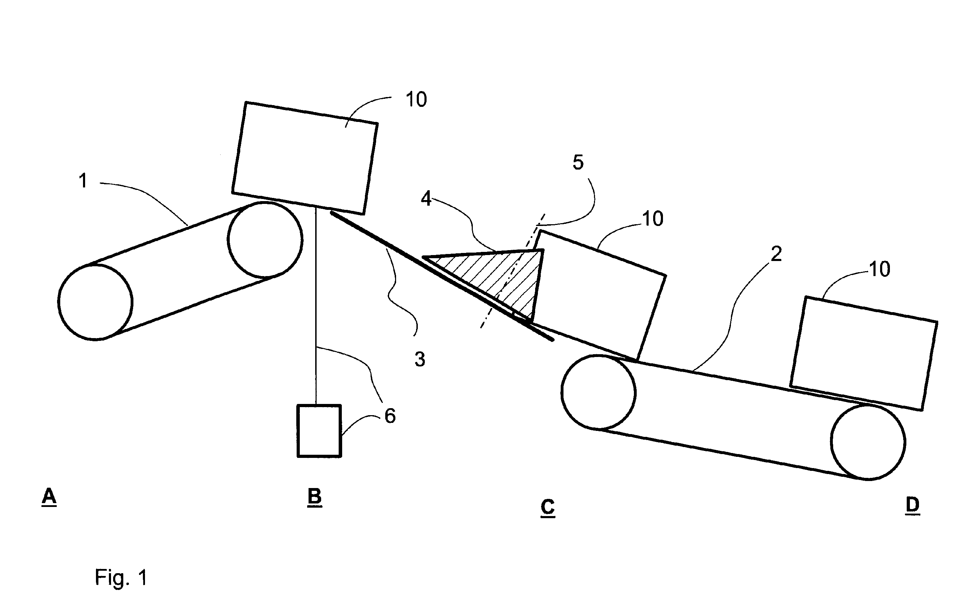

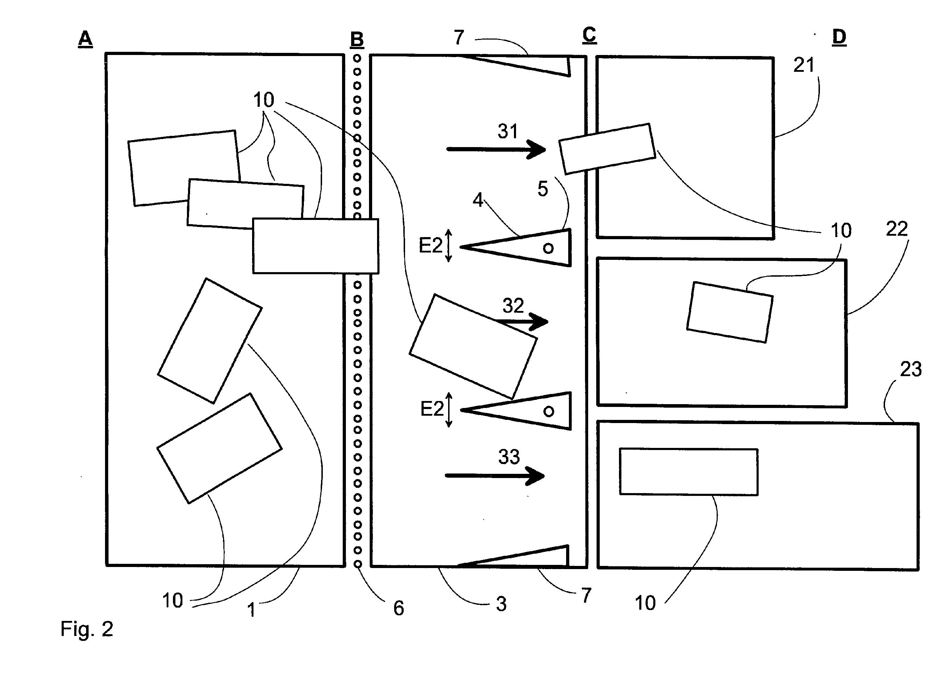

Fig. 1 zeigt ein Ausführungsbeispiel der erfindungsgemässen Vorrichtung mit einem ersten aufsteigenden Förderband 1, einer Separierstrecke 3 und einer mit Förderbändern 2 gebildeten wegführenden Förderabschnitt. Die Beschickung mit Stückgütern 10 kann in diesem Ausführungsbeispiel wahlweise vor der mit A bezeichneten Stelle oder direkt auf das Förderband 1 erfolgen. Die Beschickung erfolgt auf übliche Weise wie z.B. durch Ausleeren von Sammelbehältern oder manuell durch Personen. Es versteht sich von selbst, dass die einzelnen Stückgüter 10 eine beliebige, d.h. zufällige Verteilung hinsichtlich Ausrichtung und Anordnung haben können. Insbesondere können Stückgüter 10 durch die vorerwähnten Beschickungsarten ganz oder teilweise übereinander zu liegen kommen, wie dies beispielhaft in der Grundrissdarstellung der Vorrichtung zur Vereinzelung gemäss der Fig. 2 angedeutet ist. Um ein möglichst gutes Vereinzelungsergebnis zu erhalten, ist einerseits das Förderband 1 aufsteigend angeordnet und anderseits erfolgt beim Übergang B ein Kippen der Stückgüter 10. Die Separierstrecke 3 weist ein Gefälle auf und wird deshalb als abfallende Separierstrecke 3 bezeichnet. Etwa in der Hälfte der Separierstrecke 3 ist ein Trennkeil 4 - auch Separierkeil 4 genannt - angeordnet, der um die Achse 5 schwenkbar ist. Je nach Grösse und Beschaffenheit der Stückgüter kann die Separierstrecke 3 ebenfalls aus einem einzigen Förderband oder mehreren parallel laufenden Förderbändern gebildet sein. Insbesondere die zu separierende Zahl Stückgüter 10 pro Zeiteinheit und die typische Oberflächenbeschaffenheit der Stückgüter bilden die Entscheidungskriterien, ob die Separierstrecke 3 lediglich als schiefe Ebene, d.h. als Rutschbahn, oder mittels einem Förderband ausgebildet wird. Das Förderband selber kann auch geneigt angeordnet sein, wie dies in der Fig. 1 dargestellt ist, dies ist aber nicht zwingend. Der zu erwartende Reibungskoeffizient zwischen Stückgut und Förderoberfläche (Rutschbahn oder Förderband) ist ein wichtiger Indikator. So erlaubt ein hoher Reibungskoeffizient, die zu separierenden Stückgüter 10 bereits unmittelbar nach der Stelle B zu beschleunigen, durch eine entsprechende Wahl der Geschwindigkeit kann nach der Stelle C eine weitere Beschleunigung vorgenommen werden. Diese longitudinale Vereinzelung wird erleichtert durch eine grundsätzlich fallende schiefe Ebene von Separierstrecke 3 und wegführender Förderstrecke 2.

Die Erläuterung der Funktionsweise der Vorrichtung zur Vereinzelung von Stückgütern wird anhand der Grundrissdarstellung gemäss Fig. 2 vorgenommen. Zwischen dem Ende des ersten Förderbandes 1 und dem Beginn der Separierstrecke 3 - Position B in der Fig. 2 - ist eine Lichtbarriere 6 angebracht. Diese Lichtbarriere 6 weist z.B. in einem gerasterten Abstand von 15 - 25 mm je eine lichtaussendende Quelle und einen Lichtsensor 6 auf. In der Ausführungsform gemäss der Fig. 2 sind zwei schwenkbare Trennkeile 4 vorgesehen, die die Separierstrecke 3 in drei Bahnen 31, 32 und 33 gliedern. Die Schwenkbarkeit der Trennkeile 4 ist mit dem Bezugszeichen E2 dargestellt. Die Trennkeile 4 sind in der Fig. 2 in einer Ruhe- oder Mittenposition dargestellt. Wenn, wie vorstehend erwähnt die Separierstrecke mit mehreren Förderbändern gebildet wird, entspricht ein solches Förderband einer solchen Bahn 31, 32 oder 33. Mit Hilfe der Vielzahl der vorgenannten Lichtsensoren ist es möglich, an der Position B festzustellen, ob ein Stückgut 10 sich dort befindet. Mit dem vorgenannten Raster ist es auch möglich, die Grösse eines Stückgutes und die relative Lage zu den Trennkeilen 4 festzustellen. Eine Steuerung (in den Figuren nicht dargestellt) wertet die von den einzelnen Lichtsensoren empfangenen Signale aus und mit Hilfe einer motorischen Betätigung (in den Figuren nicht dargestellt) werden die Trennkeile 4 um die Schwenkachse 5 so bewegt, um die Stückgüter 10 in die gewünschte Bahn zu lenken. Mit gewünschter Bahn ist jeweils jene Bahn 31, 32 oder 33 vorgesehen, auf der sich im betreffenden Moment keine Stückgüter oder Stückgüter am Ende der Separierstrecke 2 befinden. Dazu wird in der Steuerung nicht nur die momentane Belegung über der Lichtbarriere 6 pro Bahn 31, 32 oder 33 geführt, sondern zusätzlich die vergangene Belegung. Diese zusätzliche Speicherung/Führung ist an die ungefähre Fördergeschwindigkeit angepasst (History). Beim Verlassen der Stückgüter 10 der einzelnen Bahnen 31, 32, 33 werden die Stückgüter auf entsprechenden Förderbändern 21, 22 und 23 weggeführt. Diese Förderbänder 21, 22 und 23 weisen eine grössere Geschwindigkeit auf als das Förderband 1. In diesem Ausführungsbeispiel sind an der Stelle D die wegführenden Förderbänder deshalb verschieden lang ausgebildet, um die einzelnen Stückgüter mit einer Umlenkung z.B. orthogonal zur Förderrichtung der Förderbänder 21, 22 und 23 weiteren Förder- oder Sortierverfahrensschritten zuzuführen. Bei einer anderen Art der Wegführung an der Stelle D können die Förderbänder 21, 22 und 23 bezüglich der Dimensionierung identisch ausgeführt sein.

In einer bevorzugten Ausführungsform kann durch die Steuerung auch berücksichtigt, wenn auf der Lichtbarriere 6 pro Bahn 31, 32 und 33 zwei Stückgüter 10 detektiert werden. Dabei brauchen pro Bahn lediglich eine nicht unterbrochene Lichtstrecke aus den Sensoren 6 detektiert zu werden.

Die Ausbildung der Sensoren 6 zur Erfassung der Grösse der Stückgüter 10 ist nicht auf Lichtbarrieren beschränkt, so kann je nach Anwendung auch ein Sensorraster 6 vorgesehen sein, das beispielsweise auf Druck reagiert.

Zusätzlich zu den schwenkbaren Trennkeilen 4 kann an jedem Rand der Separierstrecke 3 ein Führungskeil 7 angebracht werden. Dadurch wird eine Verteilung der Stückgüter zur Mitte hin auf der zweiten Förderstrecke 2 erreicht. Dadurch wird auf den weiteren Förderstrecken keine seitliche Führung benötigt.

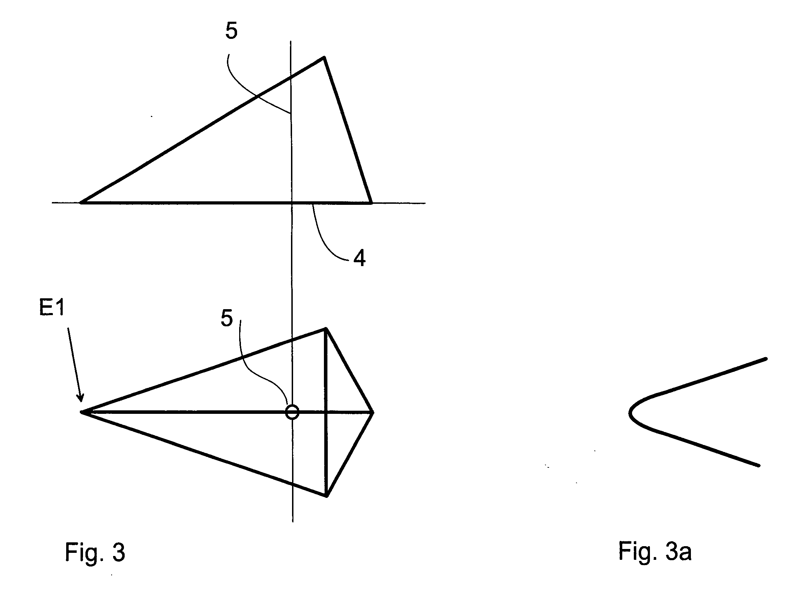

In den Figuren 1 und 2 sind die Stückgüter 10 quaderförmig dargestellt. Durch eine Anpassung der Nase 8 des Trennkeils wird der Separiervorgang so verbessert, als ein sogenanntes Aufspiessen von Stückgütern an der Nase 8 verhindert werden kann. Dies ist insbesondere dann von Bedeutung, wenn z.B. Säcke zu separieren sind. In Figur 3 ist Auf- und Grundriss eines Trennkeils 4 dargestellt. Mit dem Bezugszeichen E1 wird auf die Ausgestaltung der Nase 8 und der "Separierkante" des Trennkeils 4 hingewiesen. In Figur 3a ist vergrössert gegenüber Fig. 3 eine scharf gebogene Form aufweist. Diese Form kann auch als relativ spitze und doch ovale bezeichnet werden. Die Ausgestaltung der Separierkante richtet sich demgegenüber an den dem Fachmann bekannten Grundsätzen.

In einer anderen Ausführungsform der vorliegenden Erfindung ist einerseits die Lichtbarriere 6 zu Beginn der ersten Förderstrecke 1 angeordnet und die Nasen 8 der Trennkeile 4 sind unmittelbar bei der Stelle B befindlich. Demzufolge sind die Drehachsen 5 gegenüber der Ausführungsform nach den Fig. 1 und 2 ebenfalls entsprechend näher bei der Stelle B angeordnet. Dies erlaubt, dass für beide Ausführungsformen die gleichen Trennkeile 4 eingesetzt werden können. Die Anordnung der Trennkeile 4 richtet sich nach der mehrheitlich vorkommenden Art der zu separierenden Stückgüter. Es hat sich gezeigt, dass ca. 90% aller Postpakete einen rechtförmigen Grundriss von 300 x 500 mm nicht überschreiten.

Die vorliegende Erfindung ist nicht auf die vorgenannte zwei Ausführungsformen beschränkt. So können die erste Förderstrecke 1 und die Separierstrecke 2 auch kaskadiert vorgesehen sein, d.h. in mehrere Strecken gegliedert. Dies ist insbesondere dann vorteilhaft, wenn eine besonders hohe Separierleistung erzielt werden muss. In diesem Fall sind für die vorgenannten Strecken Förderbänder einzusetzen, wobei die Geschwindigkeit der einzelnen Förderbänder 1, 3 und 2 in Förderrichtung betrachtet erheblich zunimmt.

### Liste der verwendeten Bezugszeichen

- 1: erster Förderabschnitt, Förderband, erstes Förderband
- 2: zweiter Förderabschnitt, wegführendes Förderband, zweite Förderbänder
- 3: Separierstrecke, Förderstrecke, fallende Förderstrecke
- 4: Trennkeil
- 5: Drehachse des Trennkeils 4; Bohrung im Trennkeil 4
- 6: Sensoren, Lichtbarriere, Lichtgitter
- 7: Führungskeil
- 8: Nase des Trennkeils 4
- 10: Stückgut
- 21: wegführendes erstes Förderband
- 22: wegführendes zweites Förderband
- 23: wegführendes drittes Förderband
- 31: erste Bahn der Separierstrecke
- 32: zweite Bahn der Separierstrecke
- 33: dritte Bahn der Separierstrecke
- A: Beginn erster Förderabschnitt
- B: Übergang erster Förderabschnitt / Separierstrecke
- C: Übergang Separierstrecke / zweiter Förderabschnitt
- D: Ende zweiter Förderabschnitt
- E1: Hinweis auf Ausgestaltung der Nase 8
- E2: Schwenkbarkeit eines Trennkeils 4 um die Drehachse 5

## Patentansprüche

1. Vorrichtung zur Vereinzelung von mit zufälliger Verteilung auf einem ersten Förderabschnitt (1) herangeführten Stückgütern (10), wobei die Vorrichtung wenigstens einen zweiten Förderabschnitt (2) sowie eine zwischen den beiden Förderabschnitten (1, 2) angeordnete Separierstrecke (3) aufweist,
**dadurch gekennzeichnet, dass**
(i) die Separierstrecke (3) durch Trennkeile (4) in Bahnen (31, 32, 33) gegliedert ist und dadurch die Stückgüter auf die einzelnen Bahnen (31, 32, 33) verteilt werden;
(ii) dass die Separierstrecke (3) entweder als schiefe Ebene ausgebildet ist, auf der die Stückgüter rutschen, oder dass die Separierstrecke (3) ein Förderband (3) aufweist.

2. Vorrichtung nach Anspruch 1
**dadurch gekennzeichnet, dass**
dass vor der Separierstrecke (3) Sensoren (6) zur Erfassung der Stückgüter (10) angeordnet sind, wobei die Sensoren (6) das Vorhandensein eines Stückgutes (10) zu Beginn (B) der Separierstrecke (3) feststellen und wobei die Trennkeile (4) abhängig vom festgestellten Vorhandensein eines Stückgutes (10) schwenkbar betätigbar sind, um ein Stückgut (10) in eine bestimmte Bahn (31, 32, 33) zu lenken.

3. Vorrichtung nach Anspruch 2,
**dadurch gekennzeichnet, dass**
die Sensoren (6) als eine Lichtbarriere ausgebildet sind.

4. Vorrichtung nach Anspruch 2 oder 3,
**dadurch gekennzeichnet, dass**
mit den Sensoren (6) die Breite eines Stückgutes (10) feststellbar ist und dass die Trennkeile (4) in Abhängigkeit von der festgestellten Breite betätigbar sind.

5. Vorrichtung nach einem der Ansprüche 2 bis 4,
**dadurch gekennzeichnet, dass**
mit den Sensoren (6) das Vorhandensein von mehr als einem Stückgut (10) pro Bahn (31, 32, 33) an der Position der Sensoren (6) feststellbar ist und dass die Trennkeile (4) in Abhängigkeit von der festgestellten Anzahl Stückgüter (10) betätigbar sind.

6. Vorrichtung nach einem der Ansprüche 2 bis 5,
**dadurch gekennzeichnet, dass**
die Sensoren (6) zu Beginn der Separierstrecke (3) angeordnet ist und dass die Nase der Trennkeile (4) und die Trennkeile (4) insgesamt innerhalb der Separierstrecke (2) befindlich sind.

7. Vorrichtung nach einem der Ansprüche 2 bis 5,
**dadurch gekennzeichnet, dass**
die Sensoren (6) zu Beginn der ersten Förderstrecke (1) angeordnet sind und dass die Nasen (8) der Trennkeile (4) unmittelbar zu Beginn der Separierstrecke (3) angeordnet sind.

8. Vorrichtung nach Anspruch 6 oder 7,
**dadurch gekennzeichnet, dass**
die Nase (8) eine scharf gebogene Form aufweist.

9. Vorrichtung nach einem der Ansprüche 1 bis 8,
**dadurch gekennzeichnet, dass**
die äusseren Bahnen (31, 33) der Separierstrecke (3) einen Führungskeil (7) aufweisen.

10. Vorrichtung nach einem der Ansprüche 1 bis 9,
**dadurch gekennzeichnet, dass**
der erste und der zweite Förderabschnitt (1, 2) ein Förderband aufweist.

11. Vorrichtung nach Anspruch 10,
**dadurch gekennzeichnet, dass**
der zweite Förderabschnitt eine der Anzahl Bahnen (31, 32, 33) der Separierstrecke (3) entsprechende Anzahl parallel laufender Förderbänder aufweist.

12. Vorrichtung nach Anspruch 10 oder 11,
**dadurch gekennzeichnet, dass**
die Geschwindigkeit der Förderbänder (1, 2, 3) in Verarbeitungsrichtung von Förderband zu Förderband zunimmt.
